# EUROPEAN PATENT APPLICATION

(11) **EP 2 319 818 A1**
(43) Date of publication of application: **11.05.2011**
(21) Application number: 10190032.2
(22) Date of filing: 04.11.2010
(51) Int. Cl.: C05B 7/00, C05C 3/00, C05F 11/02

(54) **Phosphate group fertilizers**

(30) Priority: 04.11.2009 IN CH10242009; 27.09.2010 IN CH28402010
(71) Applicant: Bijam Biosciences Private Limited, Hyderabad 500082 (IN)
(72) Inventor: Prasad, Durga Yandapalli, 501202, Dist. Andhra Pradesh (IN)
(74) Representative: Cabinet Plasseraud

(57) **Abstract**

The present invention relates to a phosphate fertilizer composition comprising organic material such as lignite treated with ammonia and phosphoric acid in various proportions to derive direct phosphate fertilizer or ammoniated phosphate.

## Description

### FIELD OF INVENTION

The present invention relates to the field of agriculture in particular this invention pertains to development of efficient phosphate group fertilizer. These efficient phosphate group fertilizers are useful for enhancement of significant crop yield.

### BACKGROUND OF THE INVENTION

Phosphorous is a macronutrient and the source is from mines .The phosphate fertilizers when applied to soils very less amount will be available to plants as majority of phosphorous is been fixed in soil due to various factors such as ion antagonism etc.,. The efficiency enhancement of phosphorous fertilizers is necessary for obtaining viable returns to farmers.

It is also known that lignite is referred to as brown coal is the lowest rank of coal and used almost exclusively as fuel for steam electric generation. Although there are attempts to produce value added products for other utilities, the major consumption of the lignite is aimed majorly for power generation. Lignite, which is rich in carbon is the result of decomposition of vegetation over a millions of years ago which underwent compaction and heating. Because of its vegetative origin, this material is very rich in various functionally efficient organic molecules and it will be more beneficial to use these functionally efficient organic molecules present in lignite.

These functionally efficient organic molecules are functionally efficient than normal organic molecules (humic, fulvic acids etc.) present in lignite or leonardite due to enhanced reactive nature obtained by treating with hydrogen peroxide or alkaline hydrogen peroxide which are resultant of cleavage of lignite.

### OBJECTIVES OF THE PRESENT INVENTION

The primary objective of the present invention is to provide an efficient phosphate group based fertilizer composition which enhances the growth and yield of the crops.

Another objective of the present invention is to provide phosphate group based fertilizer composition with property of releasing more amount of water soluble phosphorus to the plant.

Yet another objective of the present invention is to provide phosphate group based fertilizer composition with property of increases the available phosphorus for plant and reduces the toxic elements in phosphate fertilizers.

Yet another objective of the present invention is to provide an efficient phosphate group based fertilizer composition with an organic based compound such as lignite, and a method of preparing such composition.

Yet another objective of this invention is to invent functionally efficient organic molecules production from lignite which is beneficial for various applications in agriculture

Still another objective of this invention is to provide a fertilizer composition of desired cleavage products of various molecular weights that are useful in deriving nutrients in agricultural utilities.

### SUMMARY OF THE INVENTION

The present invention relate to an efficient phosphate based fertilizer composition and a method of preparing the same. Accordingly, the present invention relates to a product of chemical reactions, wherein the organic material such as lignite [with or with out treating with hydrogen peroxide] is mixing with ammonia and subsequently mixing/reacting with phosphoric acid/ phosphates that was mixed with lignite [with or without hydrogen peroxide treatment].

The main reason to derive these new phosphate group fertilizers to protect phosphate from cationic binding and also to enhance microbial growth which is useful to make more phosphate available to plants.

### BRIEF DESCRIPTION OF FIGURES

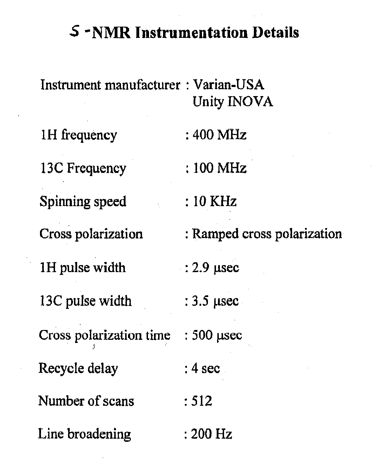

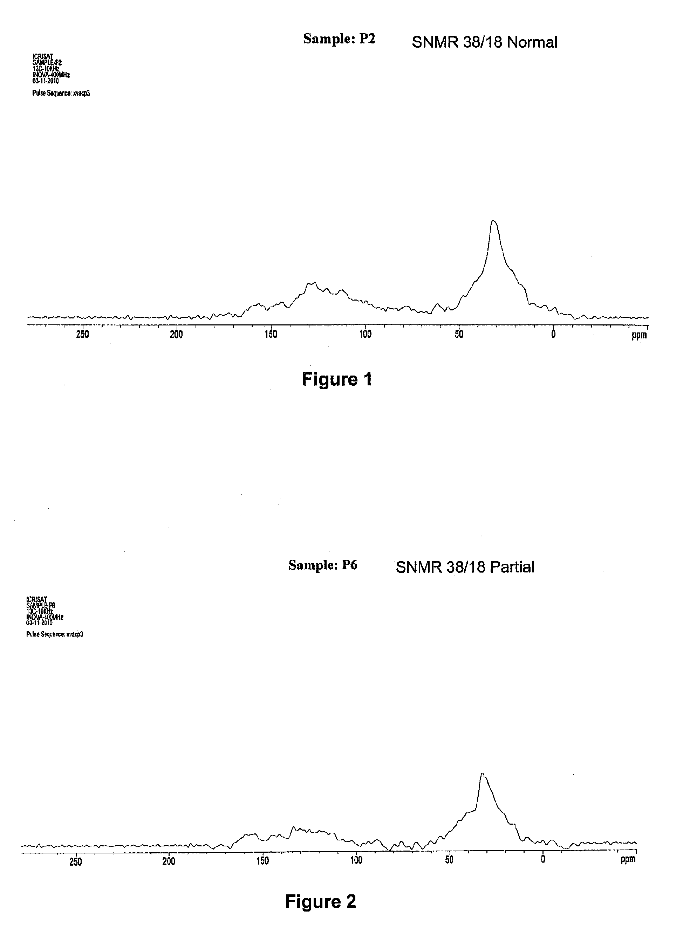

Fig 1 shows Solid state NMR of phosphate fertilizer wherein P2O5:N is 38/18 manufactured by phosphoric acid with normal lignite and ammonia mixed with normal lignite as illustrated in example 2.
Fig 2 shows Solid state NMR of phosphate fertilizer wherein P205:N is 38/18 manufactured by adding / reacting phosphoric acid with H2O2 treated lignite with ammonia mixed with normal lignite as illustrated in example 8.

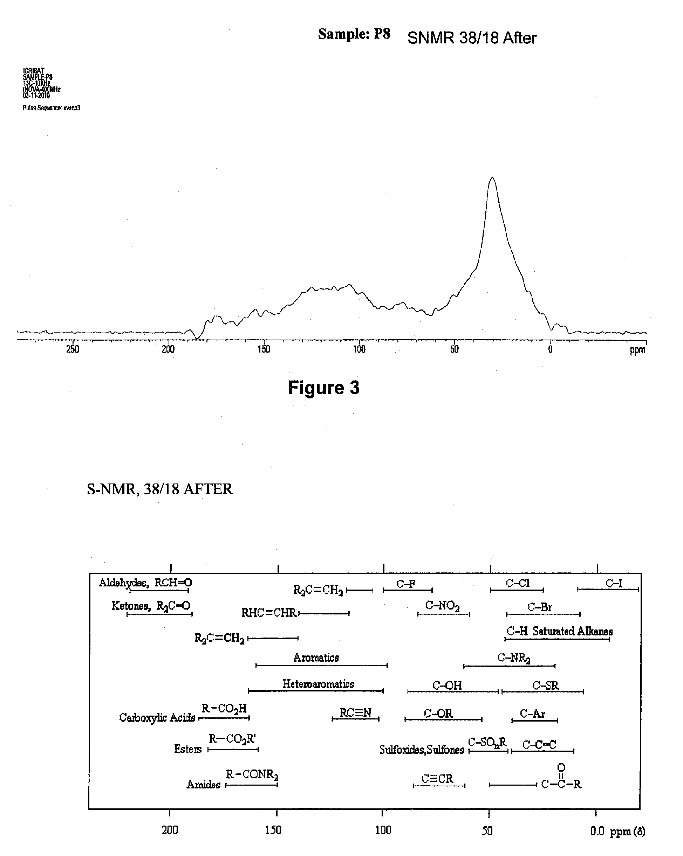

Fig 3 shows Solid state NMR of phosphate fertilizer wherein P205:N is 38/18 manufactured by reacting phosphoric acid with H2O2 treated lignite with ammonia mixed with H2O2 treated lignite as illustrated in example 6.

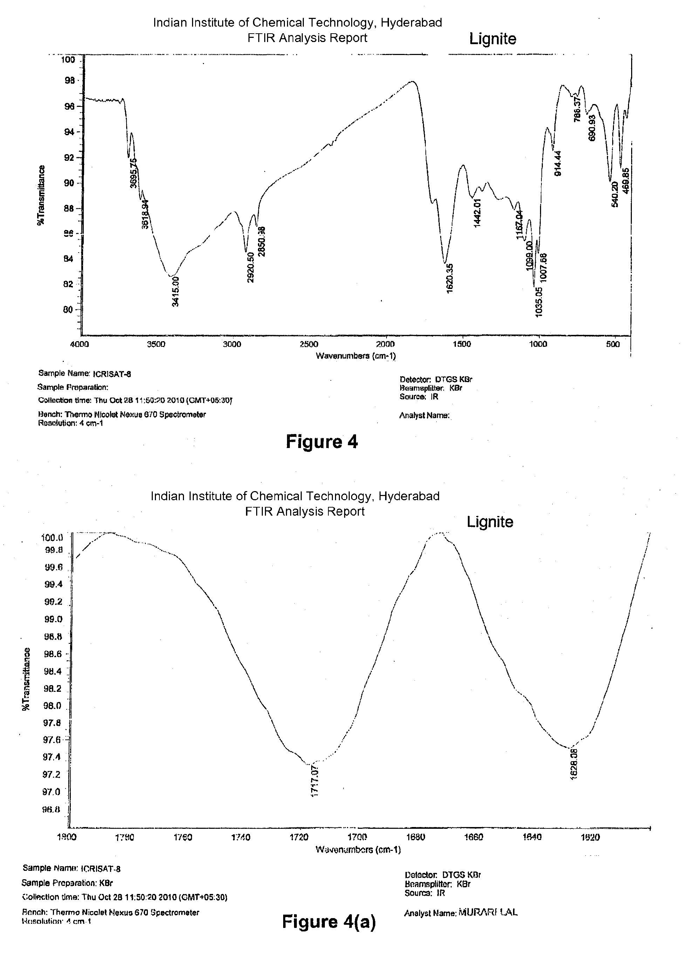

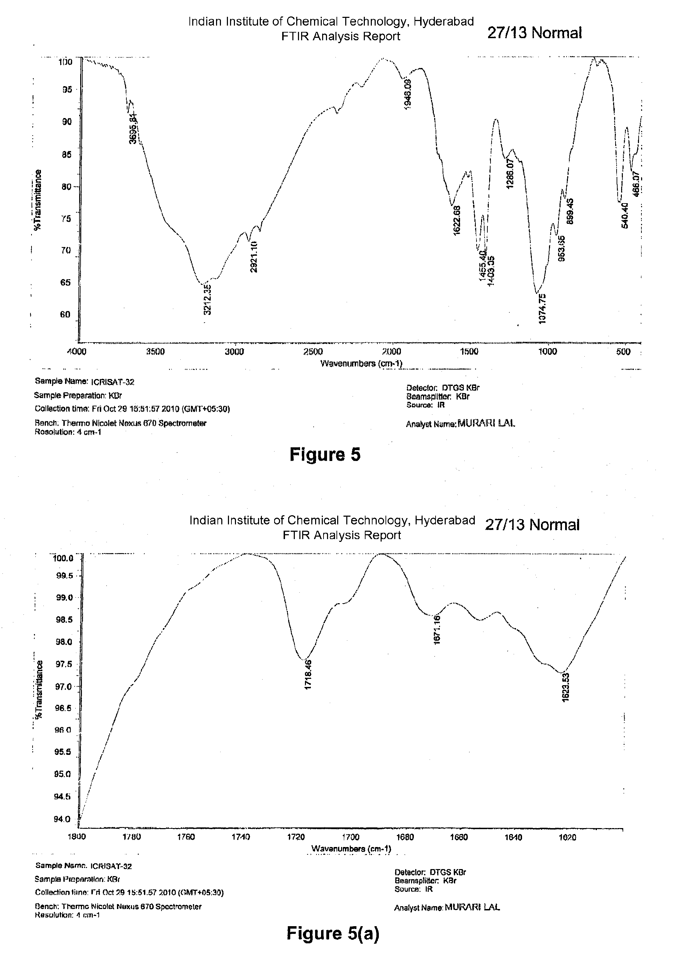

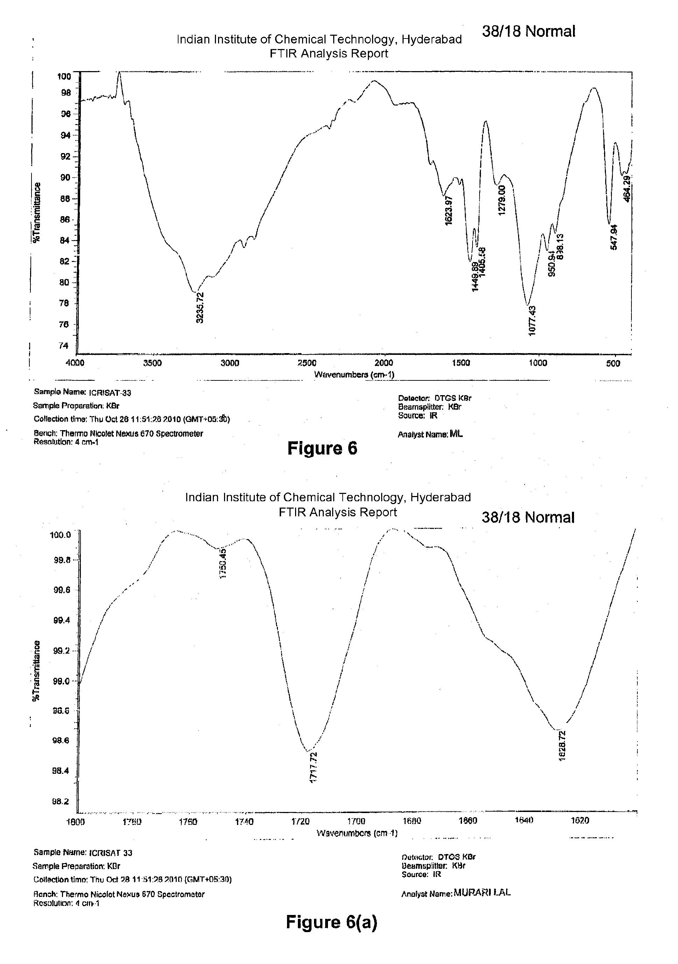

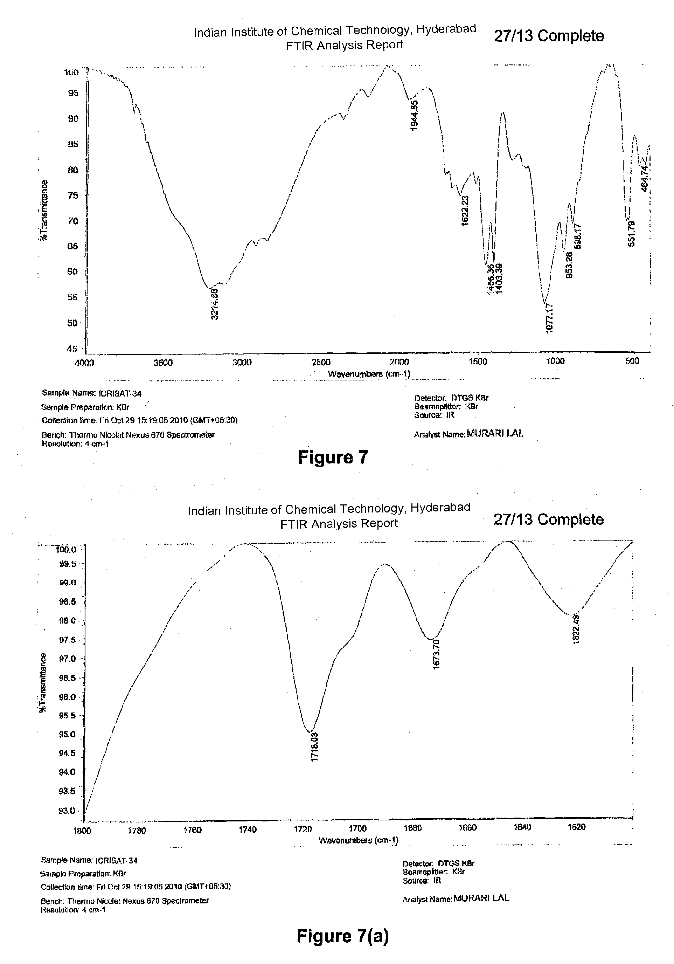

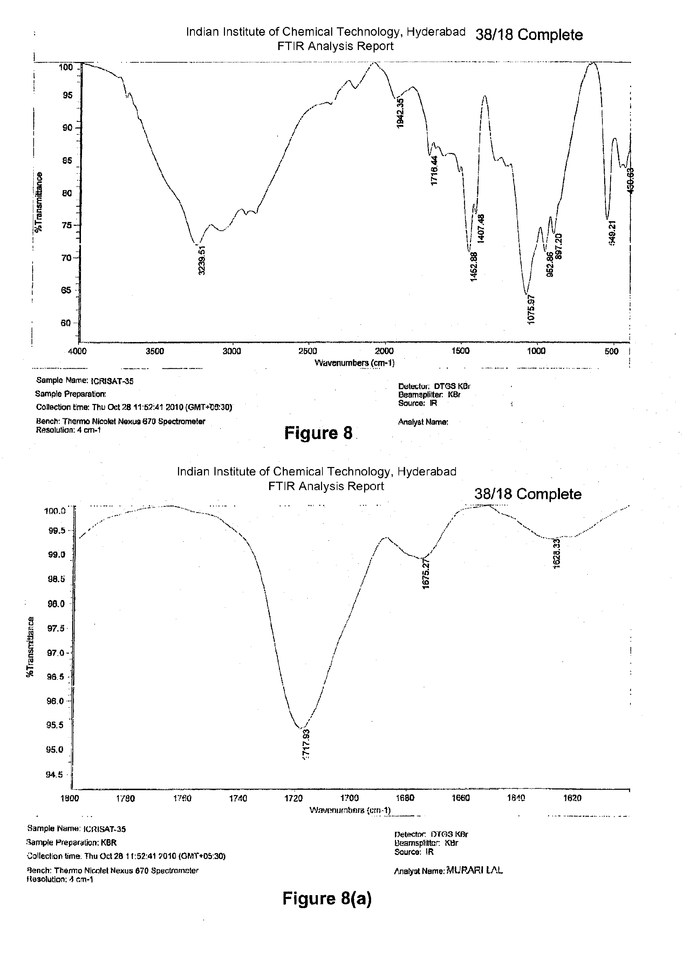

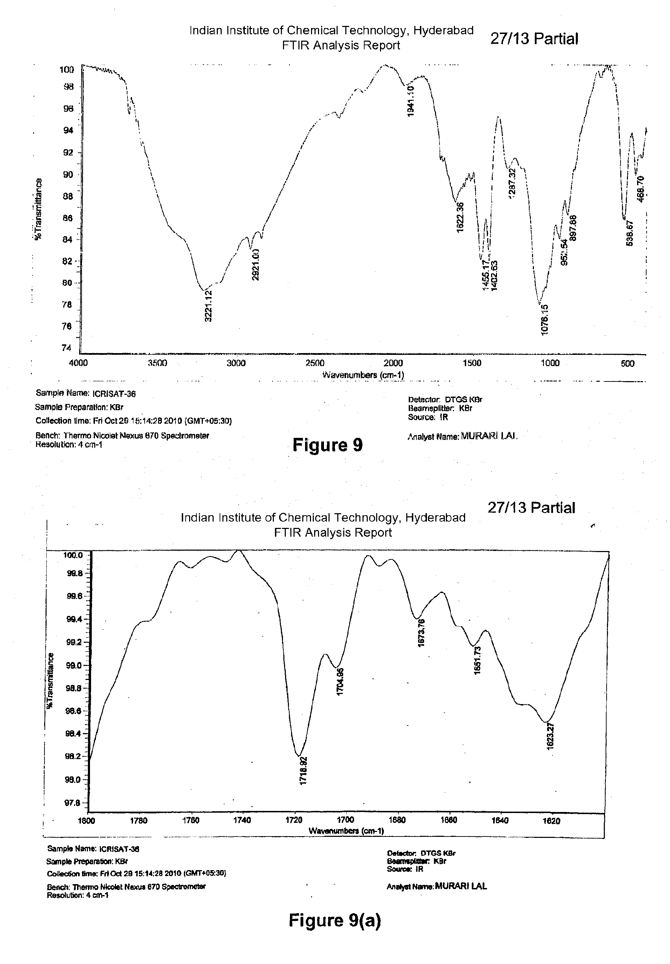

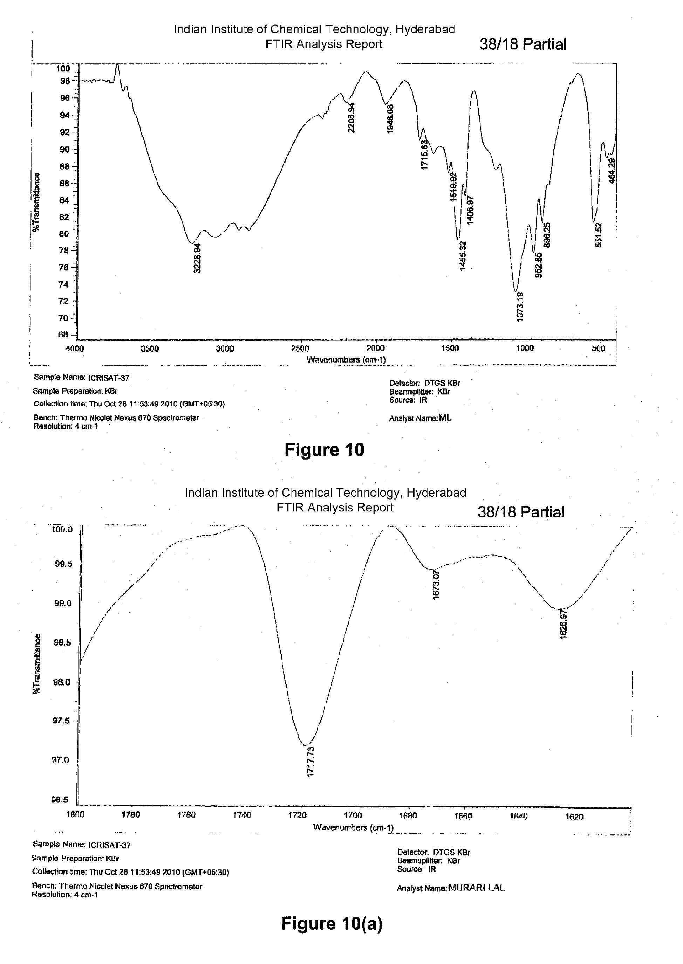

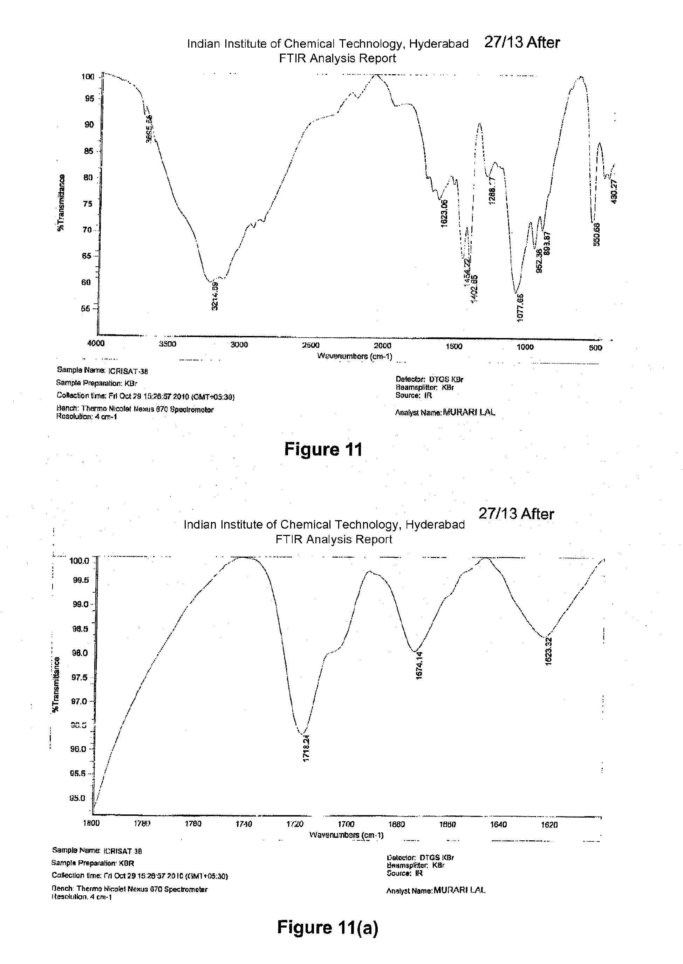

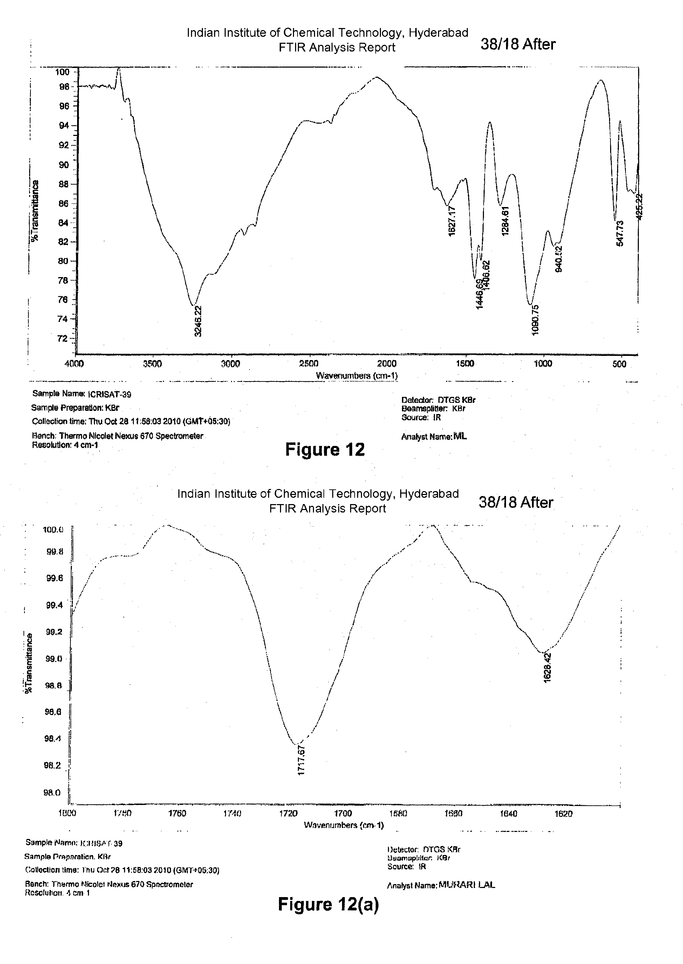

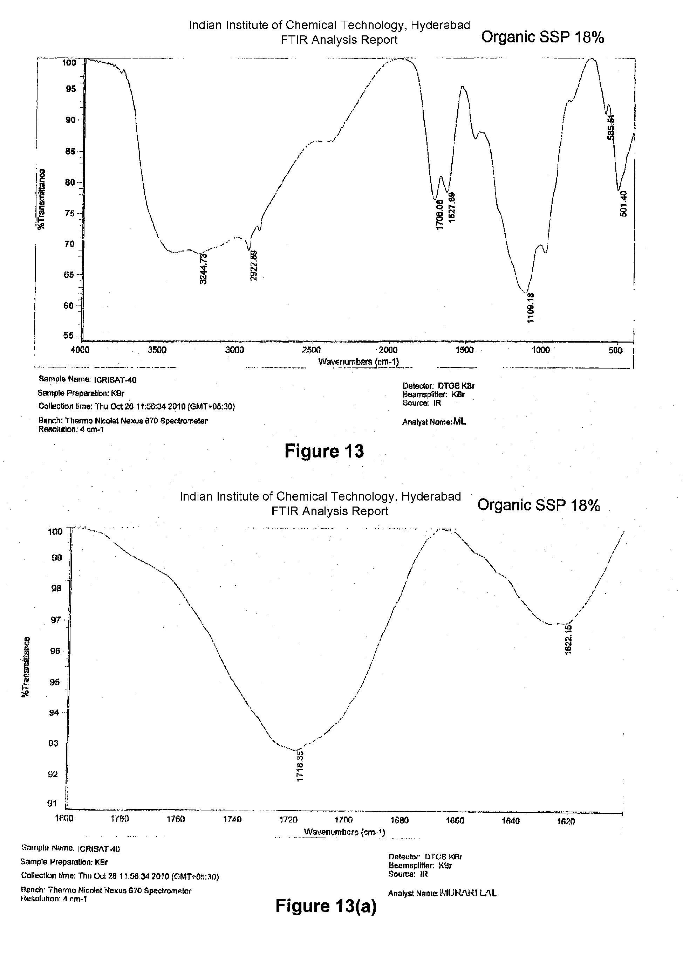

FIGURE 4-13 relates to comparative FTIR analysis of Type 4 & 4a: lignite, Type 5 & 5a: P2O5:N =27/13 NORMAL(example 2), Type 6 & 6a: P2O5:N =38/18 NORMAL (example 3), Type 7 & 7a: P2O5:N =27/13 COMPLETE(example 5), Type 8 & 8a: P2O5:N =38/18 COMPLETE (example 6), Type 9 & 9a: P2O5:N =27/13 PARTIAL(example 7), Type 10 & 10a P2O5:N =38/18 PARTIAL(example 8), type 11 & 11a P2O5:N =27/13 AFTER(example 9), type 12 & 12 a P2O5:N =38/18 AFTER(example 10), type 13 & 13a: ORGANIC SSP 18 %(example 4).

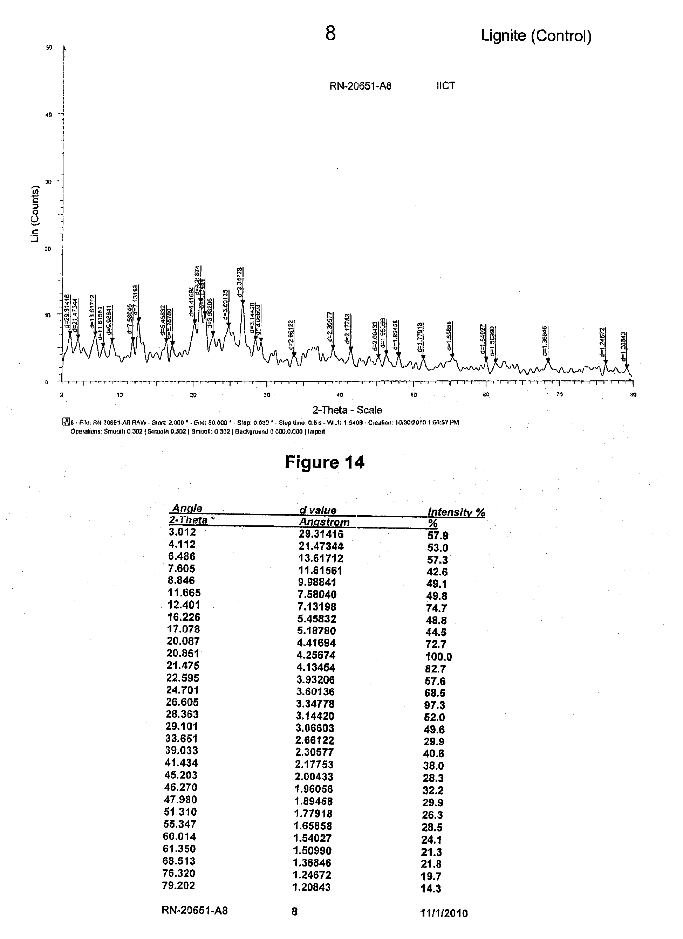

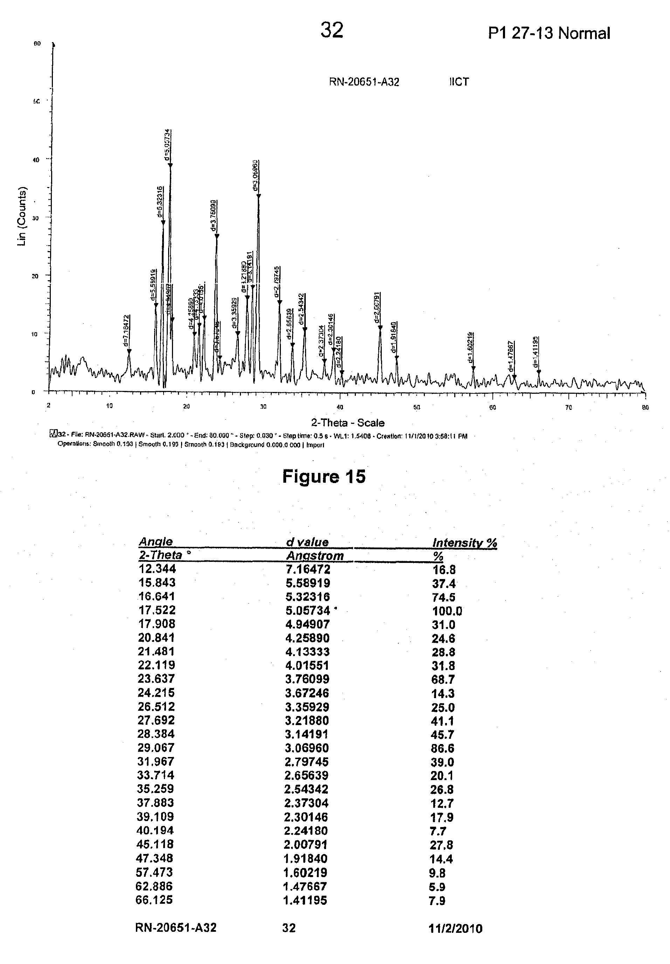

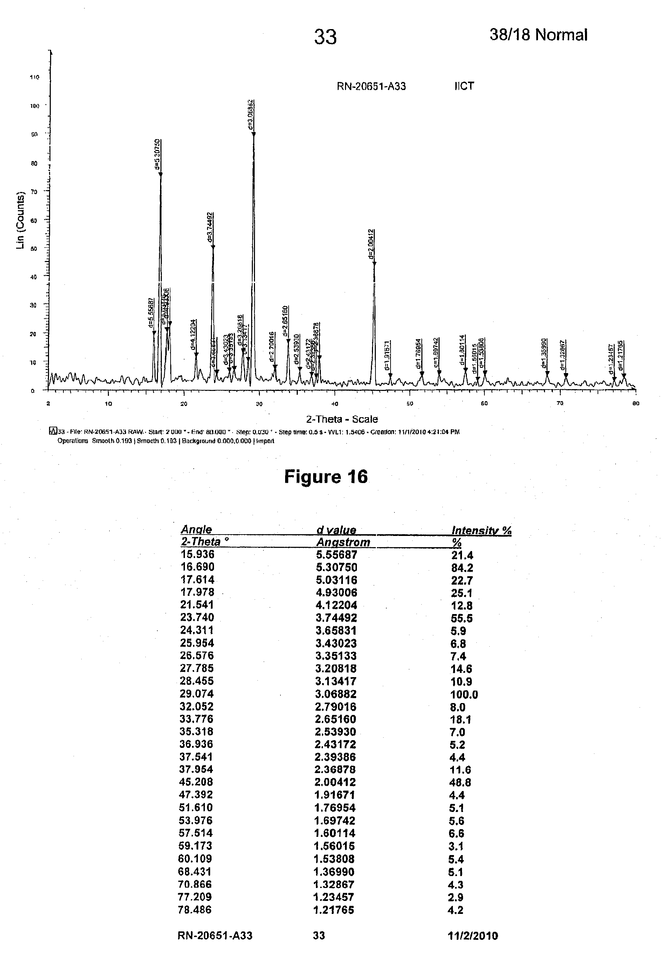

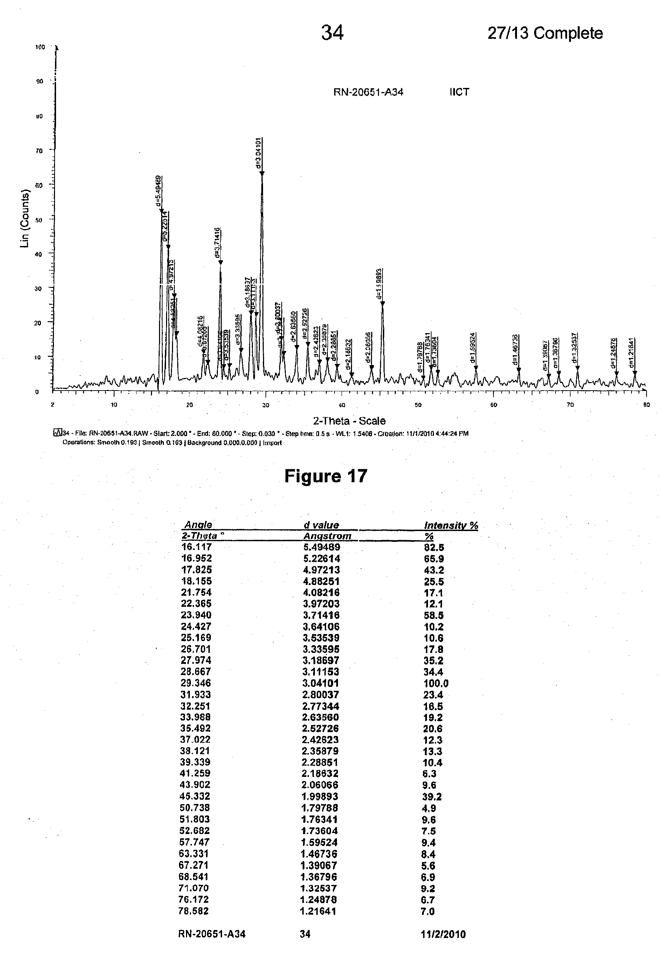

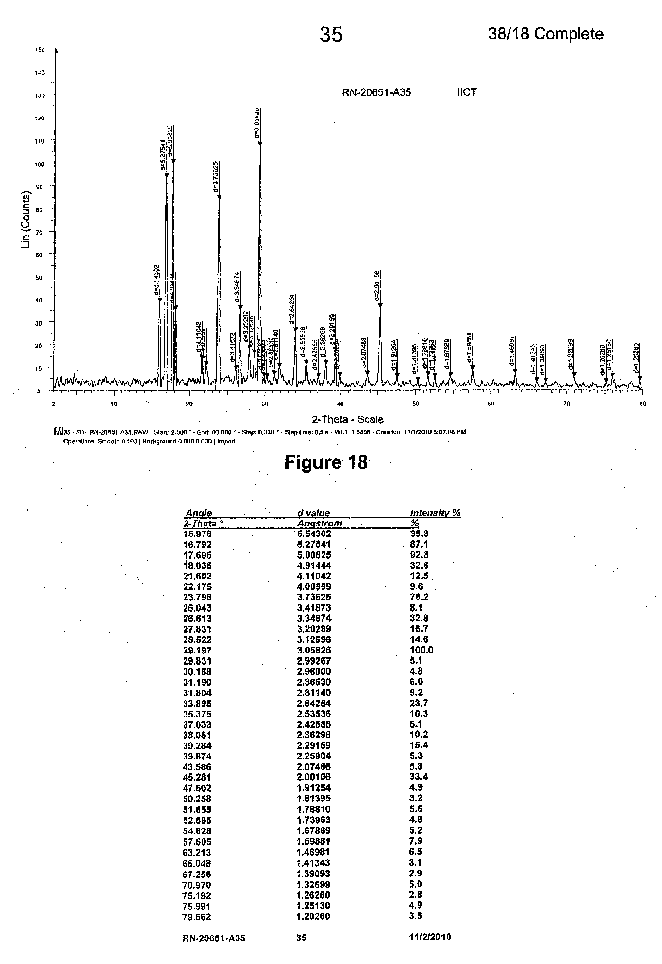

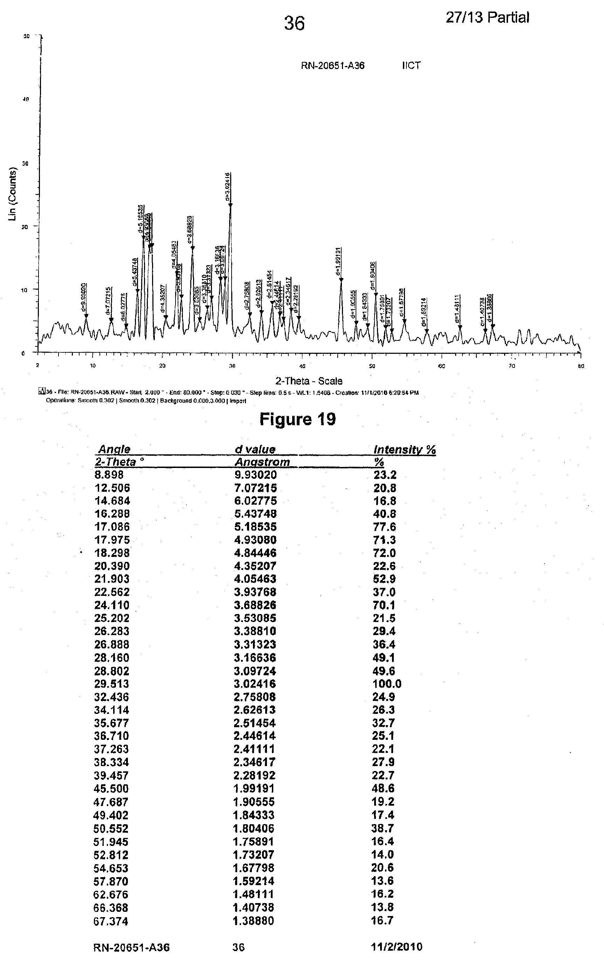

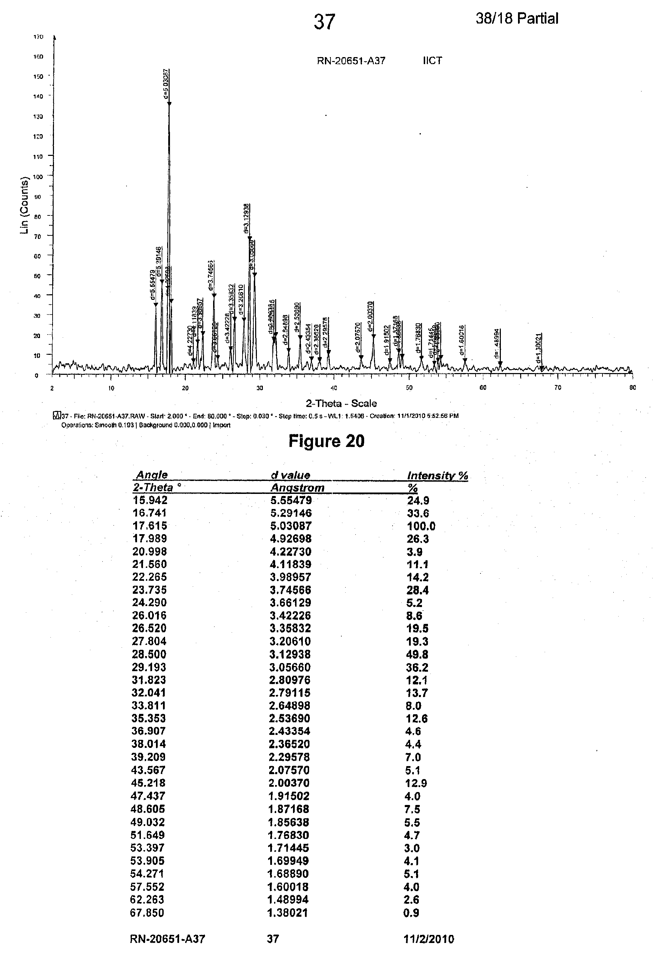

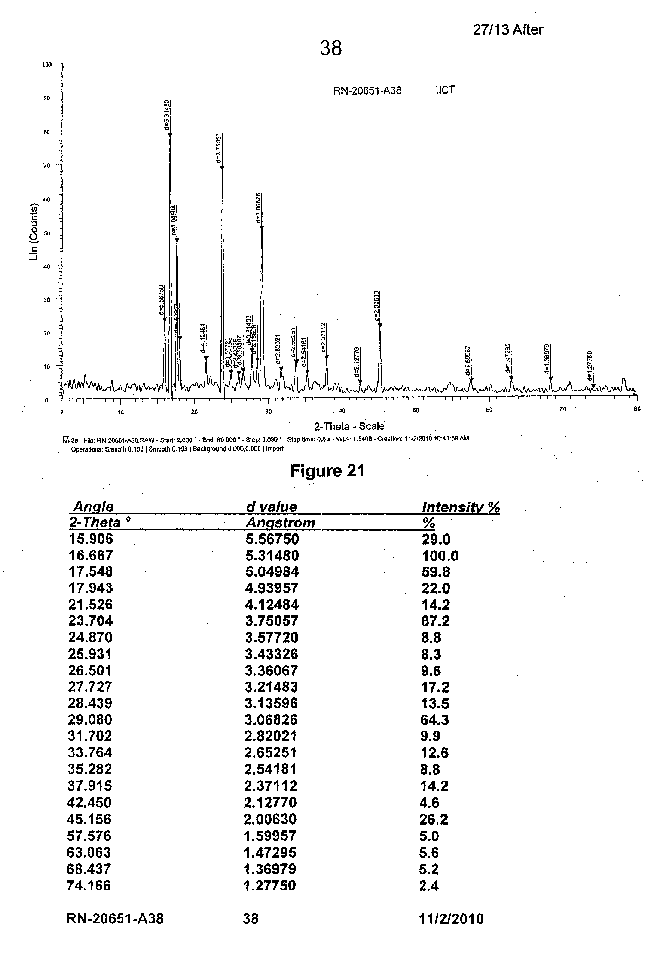

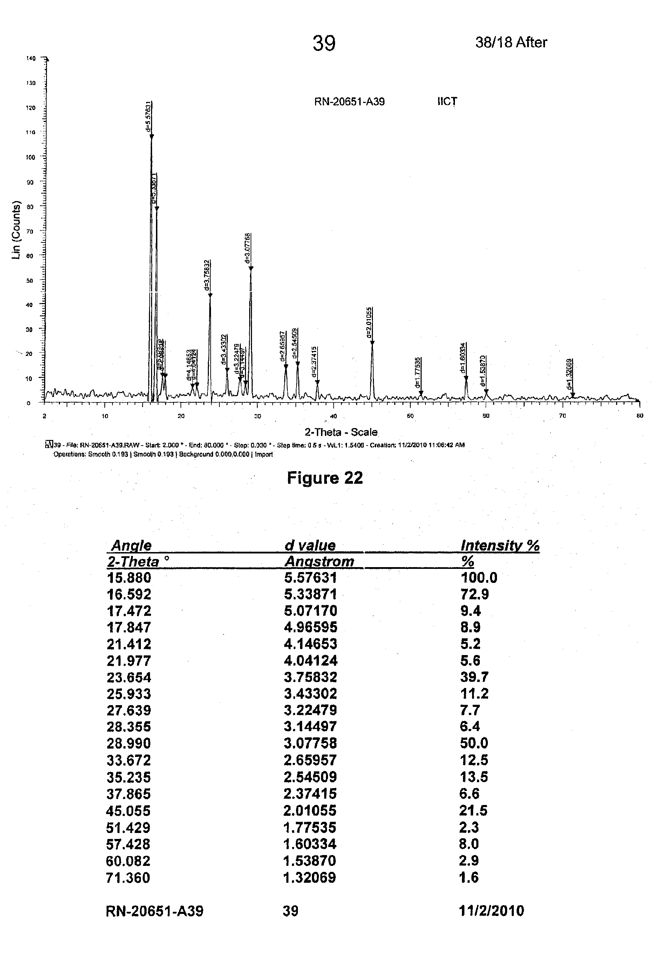

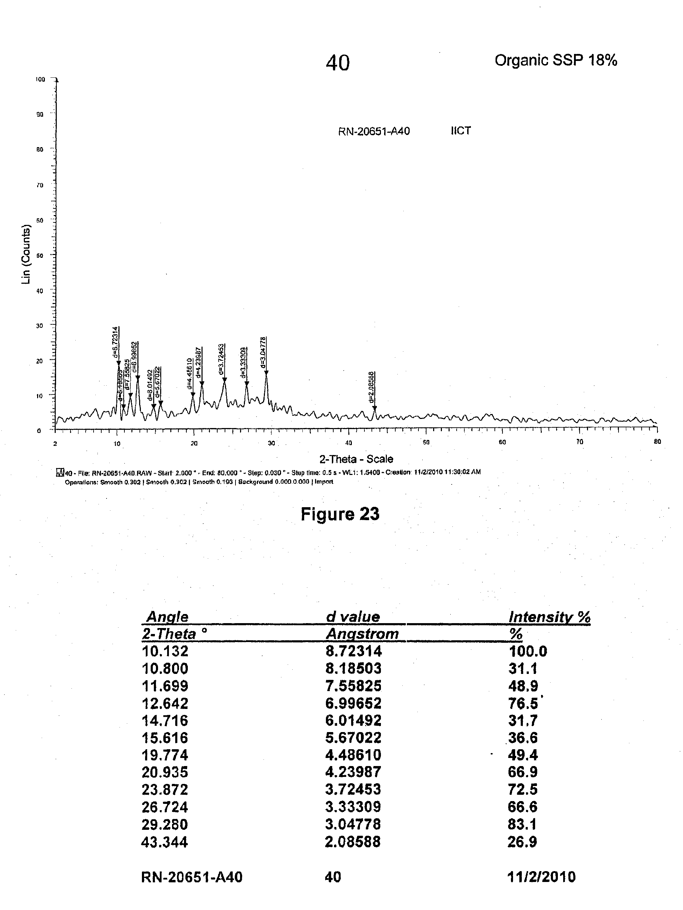

FIGURE 14-23 relates to comparative XRD analysis of Type 14: lignite, Type 15: P2O5:N =27/13 NORMAL(example 2), Type 16: P2O5:N =38/18 NORMAL(example 3), Type 17: P2O5:N =27/13 COMPLETE(example 5), Type 18: P2O5:N =38/18 COMPLETE(example 6), Type 19: P2O5:N =27/13 PARTIAL(example 7), Type 20: P2OS:N =38/18 PARTIAL(example 8), Type 21: P205:N =27/13 AFTER(example 9), Type 22: P2O5:N =38/18 AFTER(example 10), Type 23: ORGANIC SSP 18 %(example 4).

### DETAILED DESCRIPTION OF THE INVENTION

While the invention is susceptible to various modifications and alternative forms, specific aspects thereof has been shown by way of example in the illustrative examples and will be described in detail below. It should be understood, however that it is not intended to limit the invention to the particular forms disclosed, but on the contrary, the invention is to cover all modifications, equivalents, and alternative falling within the spirit and the scope of the invention as defined by the appended claims.

Before describing in detail embodiments it may be observed that the novelty and inventive step that are in accordance with the present invention resides in an efficient phosphate group fertilizer composition comprising organic material such as lignite treated with ammonia and phosphoric acid in various proportions to derive direct phosphate fertilizer or ammoniated phosphate. It is to be noted that a person skilled in the art can be motivated from the present invention and modify the various constituents of phosphate fertilizer, which are varying from crop to crop. However, such modification should be construed within the scope and spirit of the invention. Accordingly, the examples are showing only those specific details that are pertinent to understanding the aspects of the present invention so as not to obscure the disclosure with details that will be readily apparent to those of ordinary skill in the art having benefit of the description herein.

The terms "comprises", "comprising", or any other variations thereof, are intended to cover a non-exclusive inclusion, such that a setup, device that comprises a list of components does not include only those components but may include other components not expressly listed or inherent to such setup or device. In other words, one or more elements in a fertilizer composition or method proceeded by "comprises... a" does not, without more constraints, preclude the existence of other elements or additional elements in the composition or method. The following paragraphs explain present invention with respect to an efficient phosphate fertilizer composition comprising a combination of organic phosphate, ammoniated lignates, ammonium phosphates and organic ammonium phosphates, whereby the composition comprising ration of phosphorous and nitrogen in the range of 38:18 to 27:13. The invention in respect of the same may be deduced accordingly.

Accordingly, the present invention relates to an efficient phosphate group fertilizer composition an efficient phosphate group fertilizer composition comprising organic material such as lignite treated with ammonia and phosphoric acid in various proportions to derive direct phosphate fertilizer or ammoniated phosphate.

One aspect of the present invention whereby the composition comprising ratio of water soluble phosphorous and nitrogen in the range of 38:18 to 27:13.

Another aspect of the present invention whereby the composition comprising direct phosphate fertilizers having content of phosphorous in the range of 18 % (single super phosphate) to 48 % (triple super phosphate).

Yet another aspect of the present invention wherein the lignite is optionally treated with one or more times with H2O2 to derive water soluble organic molecules below 5000 Dalton molecular weight with a yield of 0.1 to 10 % in 1:4 to 1:2 w/v water extraction.

Yet another aspect of the present invention wherein the organic material (lignite substance) is organic solution of lignite cleavage.

Yet another aspect of the present invention wherein the proportions of organic material (lignite substance), ammonia and phosphoric acid is in the range of 1: 1.5: 0.5 to 10: 5: 3.

Yet another aspect of the present invention wherein the phosphoric acid is selected or derived from orthophosphoric, rock phosphate, di-ammonium phosphate or single / triple super phosphate, complex fertilizers like 28:28(NP), 17:17:17(NPK) and urea ammonium phosphate. Yet another aspect of the present invention wherein the said composition is pulverized to any desired size and incorporated as a plant nutrient.

Yet another aspect of the present invention wherein the said composition or plant nutrient increases available phosphorous to the plants by 10 to 50 times.

Yet another aspect of the present invention wherein the said composition enhances the growth of plants by 20 to 80 %.

Still another aspect of the present invention wherein A method for preparing an efficient phosphate group fertilizer composition comprising the steps of
a) reacting the lignite substance with ammonia and subsequently mixing with phosphoric acid along with water in proportions in the range of 1:1.5:0.6:0.6 to 10:5:3:3.
b) maintaining the pH of the mixture in the range of 6.0 to 7.5, in order to obtain slurry thereof,
c) drying the slurry and pulverizing the same up to desired size for obtaining the efficient phosphate fertilizer.

Yet another aspect of the present invention wherein in step (a) mixing with lignite[after treating with hydrogen peroxide]containing 0.1-10% soluble organic molecules with ammonia as first part which was mixed with phosphoric acid as second part and mixing along with water in proportions in the range 1:1.5:0.6:0.6 to 10:5:3:3.

Yet another aspect of the present invention wherein in step (a) mixing with normal lignite with ammonia which was mixed with hydrogen peroxide treated lignite [containing 0.1-10% soluble organic molecules ]with phosphoric acid mixing along with water in proportions in the range of 1:1.5:0.6:0.6 to 10:5:3:3.

Yet another aspect of the present invention wherein in step (a) mixing with lignite[after removal of soluble organic molecules [removal upto 10-90 %]obtained by treating with hydrogen peroxide that containing 0.1-10% soluble organic molecules ]with ammonia which was mixed with phosphoric acid mixing along with water in proportions in the range of 1:1.5:0.6:0.6 to 10:5:3:3.

Yet another aspect of the present invention wherein in pH of 6-7 is obtained by adding ammonia or phosphoric acid.

Now the invention will be described in detail so as to illustrate and explain various salient features of the invention.

One embodiment of the invention is to provide a novel phosphatic fertilizer with a property of releasing more water soluble or plant available phosphate compared to existing available phosphatic fertilizer such as, di ammonium phosphate and super phosphate.

Another embodiment of the invention is to produce existing phosphatic fertilizers with addition of organic molecule derived from lignite with efficient nutrient performance.

The another embodiment of the present invention relates to the method of producing phosphatic fertilizes with very less toxic nature by avoiding translocation of toxic elements that normally present in phosphatic fertilizers.

Ortho-phosphoric acid was added to lignite after treatment of lignite with ammonia (25%). 5 kgs of lignite was treated with 6 liters of 25% of ammonium solution. After stirring well by addition of 3 liters of water, 3 liters of 85% ortho-phosphoric acid was added and pH was adjusted at 6.5 to 7.5.

### Example 1

To produce phosphatic fertilizers, adding lower molecular weight organic molecules derived from lignite. (PCT/IB2007/003324), either with addition to existing phosphatic fertilizer or adding to orthophosphoric acid or rock phosphate to produce efficient phosphate fertilizer. About 1-20% w/w of lower molecular weight organic molecules derived from lignite (below 5000 Daltons molecular weight) were added. Laboratory studies were made for estimation of water soluble phosphorous in soil at periodical intervals (24, 48, 96, 144, 168 and 216 hours after fertilizer treatment) with the above prepared products with corresponding controls (DAP and SSP). A quantity of 50mg and 100 mg each product added to 100g soil followed by 50ml of water. For estimation of water soluble phosphorus, 2ml of soil water suspension was taken and centrifuged. The supernatant liquid of 0.5 ml was taken and estimated the available phosphorus as per the procedure laid out by Olson et.al. These above phosphatic fertilizers resulted in significant enhancement of available phosphorus (20-50%] in soil.

### Example 2

To 1.0 kg of lignite, 1.44 liter of ammonium hydroxide was added in small quantities and mix thoroughly. Mild ammonia vapors are released due to reaction and mixing. Lignite powder slowly becomes a paste and then a solution. 600ml water was added to the mixture and thoroughly 600 ml phosphoric acid was added to the solution. The temperature of mixture increases 80 to 90**°**C. Acidic fumes are released due to reaction and mixing. pH of the solution drops to 6.75. Ammonium hydroxide was added in required quantities to increase pH of the solution to 7.0-7.5. Product was dried to remove moisture and pulverized the powder.

This product resulted in enhancement of crop yield in chillies upto 20%.

### Example 3

To 1.0 kg of lignite, 4.0 liter of ammonium hydroxide was added in small quantities and mix thoroughly. Mild ammonia vapors are released due to reaction and mixing. Lignite powder slowly becomes a paste and then a solution. 1300ml water was added to the mixture and thoroughly 1300 ml phosphoric acid was added to the solution. The temperature of mixture increases 80 to 90**°**C. Acidic fumes are released due to reaction and mixing. pH of the solution drops to 6.75. Ammonium hydroxide was added in required quantities to increase pH of the solution to 7.0-7.5. Product was dried to remove moisture and pulverized the powder.

This product resulted in enhanced yield more than 25% over farmer recommendation on groundnut crop.

### Example 4

To 1.0 kg of H2O2, sequentially treated lignite add 320 ml of phosphoric acid was added in small quantities and mix thoroughly. Lignite powder slowly becomes a thick paste which was dried and later pulverized to obtain fine powder.

This product resulted in enhanced yield more than 30% over farmer recommendation on groundnut crop.

### Example 5

To 1.0 kg of H2O2, sequentially treated lignite, 1.44 liter of ammonium hydroxide was added in small quantities and mix thoroughly. Mild ammonia vapors are released due to reaction and mixing. Lignite powder slowly becomes a paste and then a solution. 600ml water was added to the mixture and thoroughly 600 ml phosphoric acid was added to the solution. The temperature of mixture increases 80 to 90**°**C. Acidic fumes are released due to reaction and mixing. pH of the solution drops to 6.75. Ammonium hydroxide was added in required quantities to increase pH of the solution to 7.0-7.5. Product was dried to remove moisture and pulverized the powder.

This product resulted in enhanced yield more than 20% over farmer recommendation on rice crop.

### Example 6

To 1.0 kg of H2O2, sequentially treated lignite, 4.0 liter of ammonium hydroxide was added in small quantities and mix thoroughly. Mild ammonia vapors are released due to reaction and mixing. Lignite powder slowly becomes a paste and then a solution. 1300ml water was added to the mixture and thoroughly 1300 ml phosphoric acid was added to the solution. The temperature of mixture increases 80 to 90**°**C. Acidic fumes are released due to reaction and mixing. pH of the solution drops to 6.75. Ammonium hydroxide was added in required quantities to increase pH of the solution to 7.0-7.5. Product was dried to remove moisture and pulverized the powder. This product resulted in enhanced yield more than 20% over farmer recommendation on rice crop.

### Example 7

To 900g of lignite, 1.44 liter of ammonium hydroxide was added in small quantities and mix thoroughly. Mild ammonia vapors are released due to reaction and mixing. Lignite powder slowly becomes a paste and then a solution. 600ml water was added to the mixture and thoroughly 600 ml phosphoric acid was added to the 100 gms of H2O2 sequentially treated lignite. The phosphoric acid mixed 100 gms of H2O2 sequentially treated lignite was mixed to the ammonium hydroxide containing 900gm of lignite. The temperature of mixture increases 80 to 90**°**C. Acidic fumes are released due to reaction and mixing. pH of the solution drops to 6.75. Ammonium hydroxide was added in required quantities to increase pH of the solution to 7.0-7.5. Product was dried to remove moisture and pulverized the powder.

This product resulted in enhanced yield more than 15% over farmer recommendation on rice crop.

### Example 8

To 850gm of lignite, 4.0 liter of ammonium hydroxide was added in small quantities and mix thoroughly. Mild ammonia vapors are released due to reaction and mixing. Lignite powder slowly becomes a paste and then a solution. 1300ml water was added to the mixture and thoroughly 1300 ml phosphoric acid was added to the 150 gms of H2O2 sequentially treated lignite. The phosphoric acid mixed 150 gms of H2O2 sequentially treated lignite was mixed to the ammonium hydroxide containing 850gm of lignite. The temperature of mixture increases 80 to 90**°**C. Acidic fumes are released due to reaction and mixing. pH of the solution drops to 6.75. Ammonium hydroxide was added in required quantities to increase pH of the solution to 7.0-7.5. Product was dried to remove moisture and pulverized the powder.

This product resulted in enhanced yield more than 15% over farmer recommendation on rice crop.

### Example 9

To 1.0 kg of dried organic residue [after extraction from H2O2 sequentially treated lignite], 1.44 lit of liter of ammonium hydroxide was added in small quantities and mix thoroughly. Mild ammonia vapors are released due to reaction and mixing. Lignite powder slowly becomes a paste and then a solution. 600ml water was added to the mixture and thoroughly 600 ml phosphoric acid was added to the solution. The temperature of mixture increases 80 to 90**°**C. Acidic fumes are released due to reaction and mixing. pH of the solution drops to 6.75. Ammonium hydroxide was added in required quantities to increase pH of the solution to 7.0-7.5. Product was dried to remove moisture and pulverized the powder.

This product resulted in enhanced yield more than 10% over farmer recommendation on rice crop.

### Example 10

To 1.0 kg of dried organic residue [after extraction from H2O2 sequentially treated lignite], 4.0 liter of ammonium hydroxide was added in small quantities and mix thoroughly. Mild ammonia vapors are released due to reaction and mixing. Lignite powder slowly becomes a paste and then a solution. 1300ml water was added to the mixture and thoroughly 1300 ml phosphoric acid was added to the solution. The temperature of mixture increases 80 to 90**°**C. Acidic fumes are released due to reaction and mixing. pH of the solution drops to 6.75. Ammonium hydroxide was added in required quantities to increase pH of the solution to 7.0-7.5. Product was dried to remove moisture and pulverized the powder.

This product resulted in enhanced yield more than 25% over farmer recommendation on rice crop.

### Example 11

To 1.0 kg of DAP, 250 ml of organic solution (containing 0.1 to 10 % organic molecules) derived from lignite cleavage with H2O2, was mixed thrice sequentially, after drying each time sequentially and dried.

This product resulted in enhanced yield more than 25 % over farmer recommendation on groundnut crop.

### Example 12

To 1.0 kg of SSP, 250 ml of organic solution (containing 0.1 to 10 % organic molecules) derived from lignite cleavage with H2O2, derived from lignite cleavage was mixed thrice sequentially, after drying each time sequentially and dried.

This product resulted in enhanced yield more than 50% over farmer recommendation on groundnut crop.

The above said tabular data is for indicative purpose only. However, one can not ensure the fertilizer composition which is suitable and providing best result for one crop will be equally suitable for other crops as well.

### ADVANTAGES OF THE PRESENT INVENTION

The primary advantage of the present invention is to develop an efficient phosphate based fertilizer composition which enhances the growth and yield of the crops.

Another advantage of the present phosphate based fertilizer composition with property of releasing more amount of water soluble phosphorus to the plant.

Yet another advantage of the present phosphate based fertilizer composition with property of increases the available phosphorus for plant.

Yet another advantage of the present phosphate based fertilizer composition with an organic based compound such as lignite, and a method of preparing such composition.

Yet another advantage objective of this invention is to produce eco friendly composition.

The inventors have been working to develop the invention, so that advantage can be achieved in an economical, practical, and facile manner. While preferred aspects and example configurations have been shown and described, it is to be understood that various further modifications and additional configurations will be apparent to those skilled in the art. It is intended that the specific embodiments and configurations herein disclosed are illustrative of the preferred nature of the invention, and should not be interpreted as limitations on the scope of the invention.

## Claims

1. An efficient phosphate group fertilizer composition an efficient phosphate group fertilizer composition comprising organic material such as lignite treated with ammonia and phosphoric acid in various proportions to derive direct phosphate fertilizer or ammoniated phosphate.

2. The phosphate group fertilizer composition as claimed in claim 1, whereby the composition comprising ratio of water soluble phosphorous and nitrogen in the range of 38:18 to 27:13.

3. The phosphate group fertilizer composition as claimed in claim 1, whereby the composition comprising direct phosphate fertilizers having content of phosphorous in the range of 18 % (single super phosphate) to 48 % (triple super phosphate).

4. The phosphate group fertilizer composition as claimed in claim 1, wherein the lignite is optionally treated with one or more times with H2O2 to derive water soluble organic molecules below 5000 Dalton molecular weight with a yield of 0.1 to 10 % in 1:4 to 1:2 w/v water extraction.

5. The phosphate group fertilizer composition as claimed in claim 1, wherein the organic material (lignite substance) is organic solution of lignite cleavage.

6. The phosphate group fertilizer composition as claimed in claim 1, wherein the proportions of organic material (lignite substance), ammonia and phosphoric acid is in the range of 1: 1.5: 0.5 to 10: 5: 3.

7. The phosphate group fertilizer composition as claimed in claim 1, wherein the phosphoric acid is selected or derived from orthophosphoric, rock phosphate, di-ammonium phosphate or single / triple super phosphate, complex fertilizers like 28:28(NP), 17:17:17(NPK) and urea ammonium phosphate.

8. The phosphate group fertilizer composition as claimed in claim 1, wherein the said composition is pulverized to any desired size and incorporated as a plant nutrient.

9. The phosphate group fertilizer composition as claimed in claim 1, wherein the said composition or plant nutrient increases available phosphorous to the plants by 10 to 50 times.

10. The phosphate group fertilizer composition as claimed in claim 1, wherein the said composition enhances the growth of plants by 20 to 80 %.

11. A method for preparing an efficient phosphate group fertilizer composition comprising the steps of
a) reacting the lignite substance with ammonia and subsequently mixing with phosphoric acid along with water in proportions in the range of 1:1.5:0.6:0.6 to 10:5:3:3.
b) maintaining the pH of the mixture in the range of 6.0 to 7.5, in order to obtain slurry thereof,
c) drying the slurry and pulverizing the same up to desired size for obtaining the efficient phosphate fertilizer.

12. A method as claimed in claim 11, wherein in step (a) mixing with lignite[after treating with hydrogen peroxide]containing 0.1-10% soluble organic molecules with ammonia as first part which was mixed with phosphoric acid as second part and mixing along with water in proportions in the range 1:1.5:0.6:0.6 to 10:5:3:3.

13. A method as claimed in claim 11, wherein in step (a) mixing with normal lignite with ammonia which was mixed with hydrogen peroxide treated lignite [containing 0.1-10% soluble organic molecules ]with phosphoric acid mixing along with water in proportions in the range of 1:1.5:0.6:0.6 to 10:5:3:3.

14. A method as claimed in claim 11, wherein in step (a) mixing with lignite[after removal of soluble organic molecules [removal upto 10-90 %]obtained by treating with hydrogen peroxide that containing 0.1-10% soluble organic molecules ]with ammonia which was mixed with phosphoric acid mixing along with water in proportions in the range of 1:1.5:0.6:0.6 to 10:5:3:3.

15. The method as claimed in claim 11 to 14, wherein in pH of 6-7 is obtained by adding ammonia or phosphoric acid.
